# EUROPEAN PATENT APPLICATION

(11) **EP 4 621 415 A1**
(43) Date of publication of application: **24.09.2025**
(21) Application number: 25159596.3
(22) Date of filing: 24.02.2025
(51) Int. Cl.: G01P 5/26, G01P 13/02, G01B 9/02, G02B 6/38

(54) **INTERFEROMETRIC FLUID FLOW MEASUREMENT METHOD AND SYSTEM WITH OPTICAL FERRULE CONFIGURED WITH CENTRAL OPTICAL FIBERS TO SUPPORT ROBUST INTERFERENCE PATTERN FINDER**

(30) Priority: 20.03.2024 US 202463567793 P; 30.07.2024 US 202418789123
(71) Applicant: Honeywell International Inc., Charlotte, NC 28202 (US)
(72) Inventor: JANDAK, Mikulas, Charlotte, 28202 (US); DRASAL, Zbynek, Charlotte, 28202 (US); PEKAREK, Jan, Charlotte, 28202 (US); MARK, Robert, Charlotte, 28202 (US)
(74) Representative: Haseltine Lake Kempner LLP

(57) **Abstract**

A method comprises identifying an optical axis with central symmetry in a central channel of a ferrule for an optical system; aligning outer surfaces of an etalon such that a normal of the surfaces are parallel; selecting a sensitivity axis in the central channel; selecting a boundary for the central channel that encompasses at least two fringes during operation of the optical system; defining a minimal radius of a fiber to fit N channels, which are equidistantly populated around the boundary such that N is at least four; selecting fibers in which each fiber substantially has the minimal radius to fit N channels; placing half of the fibers in the central channel such that there are gaps between the fibers; and rotating the fibers around the optical axis such that one fiber is next to the sensitivity axis, or one fiber has a center that intersects the sensitivity axis.

## Description

### CROSS REFERENCE TO RELATED APPLICATION

This application claims the benefit of and priority to U.S. Provisional Application No. 63/567,793, filed on March 20, 2024, the disclosure of which is herein incorporated by reference.

### BACKGROUND

Various optical sensing techniques and sensors are being developed for measurement of different physical properties through change of light parameters, such as wavelength, amplitude, and the like. Such optical sensing techniques and sensors are promising as they offer different failure modes and dissimilarity as opposed to traditional or legacy air data probes.

For example, a light detection and ranging (LiDAR) system may be used in a vehicle such as an aircraft for determining one or more state variables of the vehicle, such as speed, velocity, rate of climb or decent, angle of attack, or angle of sideslip. The LiDAR system can use an optical interferometer configured to form and project an optical interference pattern on an optical detector. The interference pattern can be used to derive the one or more state variables of the vehicle.

One optical sensing technique that uses a LiDAR system focuses on measurements of flight control parameters or air data, and are intended to replace or complement a traditional pitot-static system, where pitot probes may malfunction due to icing conditions, physical blockage, or even damage. In contrast, this optical sensing technique measures air data optically using a scattered light, which wavelength changes as a result of Doppler shift, and the difference between the scattered light and a reference light is detected by interferometry. Such measurement is contactless and hence very robust to potential icing conditions and/or mechanical damage or blockage compared to exposed pitot tubes.

Another reason for use of optical sensors is the range, accuracy, and/or rate at which these sensors can be used as opposed to traditional air data sensors. For example, another optical sensing technique focuses by analysis of elastic and inelastic photon scattering on high-accurate measurement of atmospheric parameters, such as wind speed and direction, humidity, temperature, density, etc., at a range up-to tens of kilometers. Such measurement being done from one location would be practically impossible with traditional sensors and/or sensing techniques.

In other approaches, optical sensors can be used for point-to-point optical communication between ground and airborne/space terminals (e.g., satellites), including analysis and corrective action for dynamics of potential atmospheric effects. As an example, high throughput communication links require precise control/alignment/adaptation of system elements related to real-time variation of atmospheric transmission parameters.

Typical challenges of optical sensors include a low signal-to-noise ratio (SNR) due to limited scatter cross-section and a relatively large distance over which a measurement is required to perform, particularly with limited laser power due to laser safety constraints in aerospace applications. Another challenge is linked to the demand for measurement accuracy. For example, when a measurement is based on elastic scattering, with the relative change in wavelength, the detection principle will be in the sub-ppm range due to the large difference between the speed of light and a measured speed of motion. Furthermore, there are typically multiple optical channels (lines of sight) to obtain the information of directional measurement, to be combined into a vector measurement, which further reduces usable laser power and detection SNR.

Due to the challenges given above and the general nature of optical sensing based on interferometry, as well as the demand for high spatial uniformity and in-time constant mechanical accuracy, there is a need for individual system optical components (e.g., lenses, filters, etalon, etc.) to be well aligned and robust to environmental changes. In addition, due to a large number of element surfaces, there is a need for the optical components to be robust to parasitic system reflections, including ghost reflections and stray light.

### SUMMARY

A method comprises identifying an optical axis with central symmetry in a central channel of a ferrule for an optical system having a given aligned optical setup; aligning outer surfaces of an etalon of the optical system such that a normal of the surfaces are parallel; selecting a sensitivity axis in the central channel of the ferrule; and selecting a boundary for the central channel that encompasses at least two fringes during operation conditions of the optical system for the given aligned optical setup. The method further comprises defining a minimal radius of an optical fiber to fit N channels, which are equidistantly populated around the boundary such that N is at least four; selecting a set of optical fibers in which each optical fiber substantially has the minimal radius of an optical fiber to fit N channels; placing half of the set of optical fibers in the central channel such that there are gaps between the placed optical fibers; and rotating the placed optical fibers around the identified optical axis such that one optical fiber is next to the sensitivity axis, or one optical fiber has a center that intersects the sensitivity axis. The gaps between the placed optical fibers prevent biased measurements from ghost reflections in the ferrule of the optical system.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a flow diagram of method for mitigation of ghost effects in a ferrule of an optical system, according to one implementation;
Figure 2A is a schematic side view of an example optical system, in which an etalon has a wedge shape with opposing surfaces that are aligned to match each other;
Figure 2B is a schematic top view of a ferrule for the optical system of Figure 2A, which shows an identified optical axis and a sensitivity axis;
Figure 3A is a schematic cross section end view of an exemplary ferrule configured for eight optical fibers, with no manufacturing tolerance;
Figure 3B is a schematic cross section end view of an exemplary ferrule configured for four optical fibers, with no manufacturing tolerance;
Figure 4A is a schematic cross section end view of an exemplary ferrule configured for eight optical fibers, with a manufacturing tolerance;
Figure 4B is a schematic cross section end view of an exemplary ferrule, configured for four optical fibers, with a manufacturing tolerance;
Figure 5A is a schematic cross section end view of an exemplary ferrule, in which eight optical fibers are selected to meet a minimal radius of fibers to fit two peaks of an interference pattern, with no manufacturing tolerance;
Figure 5B is a schematic cross section end view of an exemplary ferrule, in which six optical fibers are selected to meet a minimal radius of fibers to fit two peaks of an interference pattern, with no manufacturing tolerance;
Figure 5C is a schematic cross section end view of an exemplary ferrule, in which eight optical fibers are selected to meet a minimal radius of fibers to fit two peaks of an interference pattern, with a manufacturing tolerance;
Figure 6A is a schematic cross section end view of an exemplary ferrule, in which four optical fibers are selected and arranged, with no manufacturing tolerance, such that there are gaps between channels and two of the fibers are in direct contact with each other;
Figure 6B is a schematic cross section end view of an exemplary ferrule, in which three optical fibers are selected and arranged, with no manufacturing tolerance, such that there is a gap between each pair of fibers;
Figure 6C is a schematic cross section end view of an exemplary ferrule, in which four optical fibers are selected and arranged, such that there are gaps between channels and two of the fibers are separated by a manufacturing tolerance;
Figure 7A is a schematic cross section end view of an exemplary ferrule, in which four optical fibers are arranged such that there are gaps between channels and two of the fibers are separated by a manufacturing tolerance, with one fiber positioned to be touching a sensitivity axis of the ferrule;
Figure 7B is a schematic cross section end view of an exemplary ferrule, in which three optical fibers are arranged such that there is a gap between each pair of fibers, and one fiber is positioned such that a center of the fiber s along a sensitivity axis of the ferrule;
Figure 8A is a schematic cross section end view of an exemplary ferrule, in which four optical fibers are placed in a central channel and used to define an inner boundary for placement of three additional smaller fibers;
Figure 8B is a schematic cross section end view of an exemplary ferrule, in which three optical fibers are placed in a central channel and used to define an inner boundary for placement of four additional smaller fibers; and
Figure 9 is a schematic isometric view of an optical sensor system for a vehicle, according to one embodiment, which can be implemented to mitigate ghost effects in a ferrule of the optical sensor system.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A method and system for configuration of central optical fibers in a ferrule to support a robust interference pattern finder in an optical sensor, is described herein.

The present approach provides a design approach for how to incorporate several measurement channels into one optical sensing device via a ferrule, and simultaneously limit the effect of undesired reflections or "ghost reflections" in the device. Such reflections can spatially overlap with true physical measurement channels, which can spatially overlap phase patterns, and hence bias phase measurements.

In an exemplary optical sensor device, such as an optical interferometer, there is one central channel, one reference channel, and multiple (e.g., four) sky (measurement) channels. Moreover, any optical sensor with multiple measurement channels (line of sights) is likely to follow this configuration. Input channels (e.g., optical fibers) are bundled into a single ferrule, which defines how the optical signals are propagated through the sensor system.

A problem with the central channel (or fiber) is the so-called "ghost effect" from stray light folding, which may lead to bias for an optical axis and interference pattern scaling finder of an optical interferometer (central and scaling of an interference pattern). For example, stray light folding of the central fiber has been experimentally demonstrated for an etalon with wedges in the optical interferometer. In addition, there are various stray light sources or surfaces, with the most dominant sources being between the ferrule and an etalon, and an optical detector and the etalon. Since mirrors on inner surfaces of the etalon are intentionally designed with high reflectance to increase finesse, the unwanted reflection (stray light) of different sky channels can reach up to about 20 %. If this unwanted reflection is further reflected the calculated back reflection (reflection from stray light) can be almost 3 %.

While current designs of the sky and reference channels are not affected by direct reflection, the signal on the detector for the central channel includes a desired signal and a reflected signal. It has been found that the reflected signal decreases finesse, and hence reduces the precision with which an optical axis of the device is found by algorithm.

The present approach provides an optical center finding method, in which one large central optical fiber is replaced with several smaller fibers, with the position of the smaller fibers avoiding central symmetry along the optical axis. This approach results in unwanted reflected light being directed into places on the detector where there is empty space in the device, and is based on combining pixels from the position of the smaller fibers as opposed to a single larger fiber. The optical sensor device is thus not affected by stray light and hence there is a reduction of systematic error (bias), which otherwise could stem from a miscalculation of the optical center.

In the present design of a ferrule layout, fibers of an input ferrule are arranged such that ghost reflections are projected on the part(s) of the detector not used for active center finding and/or for phase measurement by sky channels. For example, in the design of the input ferrule, the sky channels, reference channel, but mainly central channel(s) are designed such that unwanted reflections do not alter the measurement results. Thus, the effect of ghost reflections on center finding and/or phase measurement, respectively, is eliminated.

Further details of various aspects and embodiments are described hereafter and with reference to the drawings.

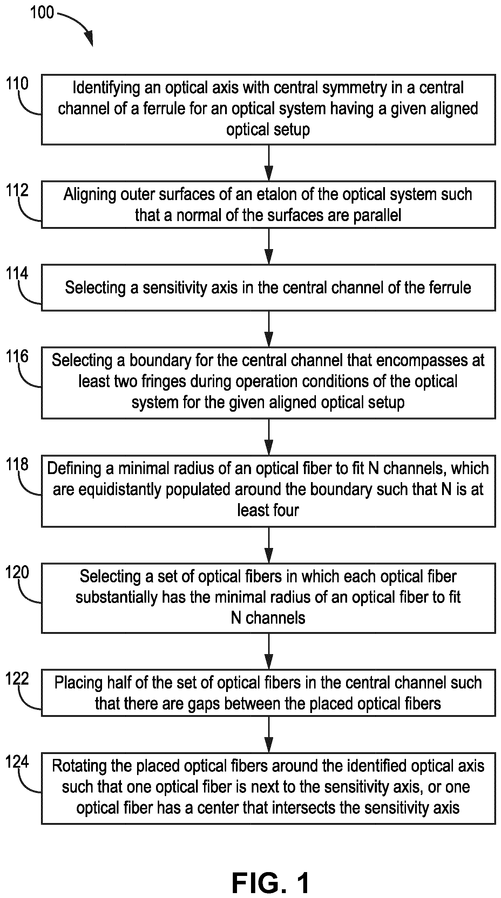

Figure 1 is a flow diagram of method 100 for mitigation of ghost effects in a ferrule of an optical system including an interferometer, according to one implementation. The method 100 comprises identifying an optical axis with central symmetry in a central channel of a ferrule for an optical system, which has a given aligned optical setup (block 110); and aligning outer surfaces of an etalon of the optical system such that a normal of the surfaces are parallel (block 112). The method 100 further comprises selecting a sensitivity axis in the central channel of the ferrule (block 114); and selecting a boundary for the central channel that encompasses at least two fringes during operation conditions of the optical system for the given aligned optical setup (block 116).

Thereafter, method 100 includes defining a minimal radius of an optical fiber to fit N channels, which are equidistantly populated around the boundary such that N is at least four (block 118); selecting a set of optical fibers in which each optical fiber substantially has the minimal radius of an optical fiber to fit N channels (block 120); and placing half of the set of optical fibers in the central channel such that there are gaps between the placed optical fibers (block 122). The method 100 then includes rotating the placed optical fibers around the identified optical axis such that one optical fiber is next to (or touching) the sensitivity axis, or one optical fiber has a center that intersects the sensitivity axis (block 124). The gaps between the placed optical fibers prevent biased measurements from ghost reflections in the ferrule of the optical system.

If there is enough inner space in the central channel after placing the optical fibers, the steps of method 100 can be repeated starting at block 116, with the exception that the boundary is defined by the already placed optical fibers, and the sensitivity axis is rotated by about 45 degrees to achieve a more uniform covered area.

In some embodiments, the N channels can have an even number of optical fiber pairs. For example, the N channels can include 4 channels (2 fiber pairs), 8 channels (4 fiber pairs), 12 channels (6 fiber pairs), or the like. In other embodiments, the N channels can have an odd number of optical fiber pairs. For example, the N channels can include 6 channels (3 fiber pairs), 10 channels (5 fiber pairs), 14 channels (7 fiber pairs), or the like.

In some embodiments, such as when there are 4, 8, or 12 channels, one optical fiber is positioned to touch the sensitivity axis. In other embodiments, such as when there are 6, 10, or 14 channels, a center of one optical fiber is along the sensitivity axis. In addition, in various implementations, the gaps can include one or more manufacturing tolerance gaps between at least two optical fibers or between corresponding centrally symmetric fibers.

Further details of a design example according to the present approach, which provides for ghost effect mitigation, are described as follows with reference to various drawings.

Initially, in step 1) of the design example, an optical axis is identified (e.g., center of a ferrule) for an optical system when ideally aligned. In step 2), a wedge of both surfaces of an etalon are aligned to match each other. In step 3) a sensitivity axis of the optical system is identified or selected that shows, for example, the largest sensitivity (optional), typically along a tilt of the etalon surfaces.

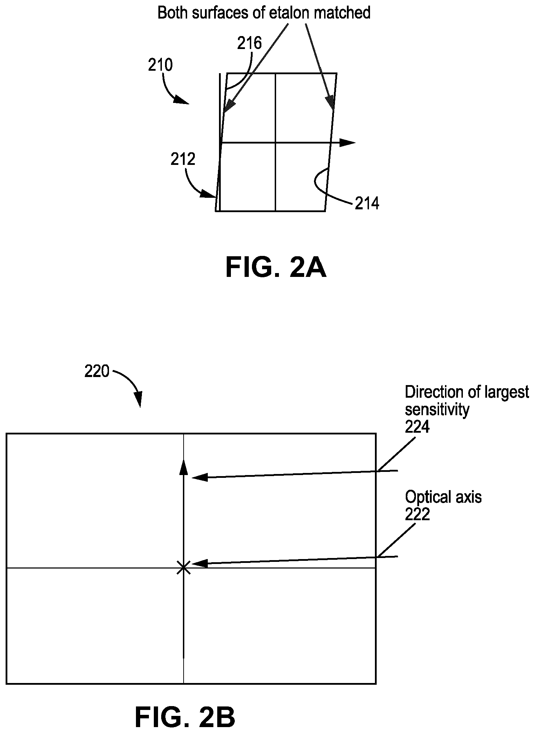

The alignment of the optical system can be done such that the center of the central channel enters an inner gap of the etalon substantially perpendicularly. Afterwards, the symmetry of the ferrule is kept throughout the system to the detector. This requires a tilt of the ferrule with a collimating lens to be at an angle, which is dependent on refractive indexes of the optics used in the system. Further details regarding alignment of optical sensor systems can be found in U.S. Patent Application No. 18/433,996 entitled TECHNIQUES FOR COMPENSATING FOR ERRORS IN AN OPTICAL INTERFEROMETER SYSTEM, the disclosure of which is incorporated by reference herein (e.g., see Fig. 2 and description thereof).

Figure 2A is a schematic side view of an optical system 210, in which an etalon 212 has a wedge shape with opposing surfaces 214, 216 that are aligned to match each other. Figure 2B is a schematic top view of a ferrule 220 for optical system 210, which shows an identified optical axis 222, and a sensitivity axis 224 that is in a direction of largest sensitivity. The sensitivity axis 224 is substantially orthogonal to optical axis 222.

In step 4) of the design example, a minimal radius or boundary of a central channel is selected that encompasses at least two peaks or fringes (full half width) of an interference pattern over the operation conditions (e.g., pressure, temperature) for a given aligned optical setup. For example, a corresponding minimal radius to fit two peaks or fringes can be at least about 500 µm. However, the minimal radius is dependent on sensor lensing focal lengths and magnification factor.

In step 5) of the design example, a minimal possible radius of optical fibers to fit N (4 minimal) channels is defined or designed, with the fibers equidistantly populated on the same radius or boundary to encompasses at least two peaks of an interference pattern as described in step 4). Optionally, when N is 4, 8, or 12, a manufacturing tolerance gap can be added between two fibers and between corresponding centrally symmetric fibers.

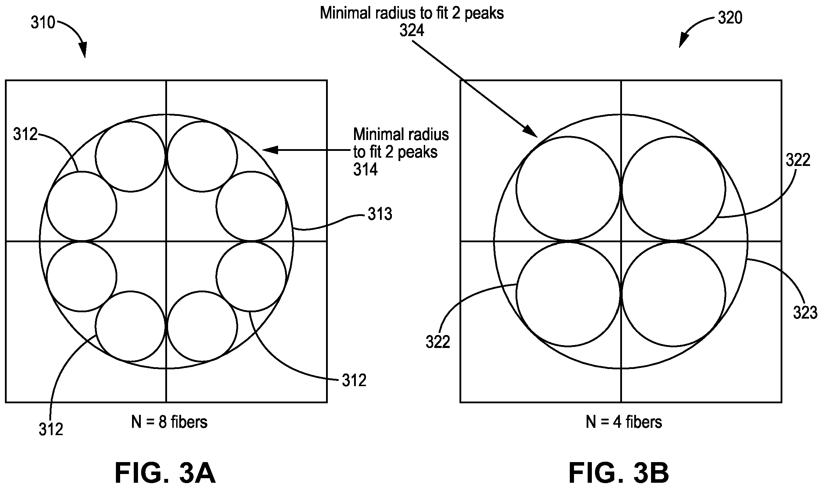

For example, Figure 3A is a schematic cross section view of a ferrule 310, in which N is 8 fibers (for a set of fibers 312), with no manufacturing tolerance. The minimal radius (or boundary) of a central channel 313 to fit two peaks of an interference pattern is indicated at 314. Figure 3B is a schematic cross section view of a ferrule 320, in which N is 4 fibers (for a set of fibers 322), with no manufacturing tolerance. The minimal radius (or boundary) of a central channel 323 to fit two peaks of an interference pattern is indicated at 324.

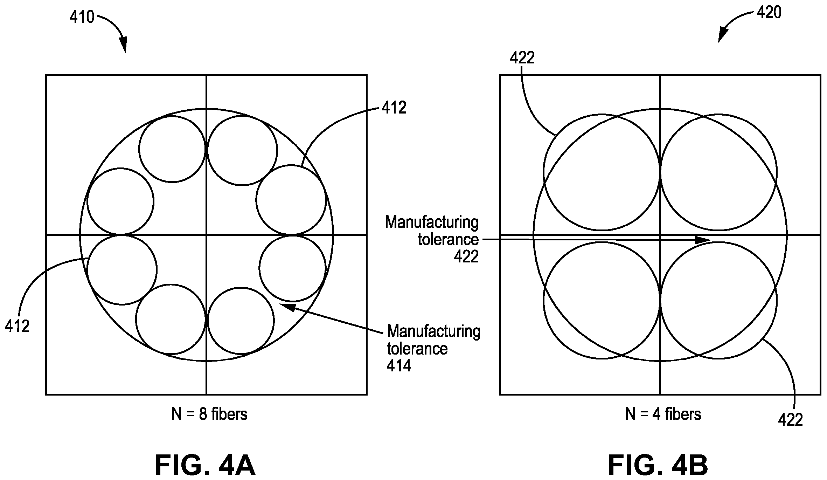

Figure 4A is a schematic cross section view of a ferrule 410, in which N is 8 fibers (for a set of fibers 412), with a manufacturing tolerance indicated at 414. Figure 4B is a schematic cross section view of a ferrule 420, in which N is 4 fibers (for a set of fibers 422), with a manufacturing tolerance indicated at 424.

In step 6) of the design example, the closest largest radius of commercially available optical fibers is selected to meet the minimal radius of optical fibers to fit N, as described in step 5).

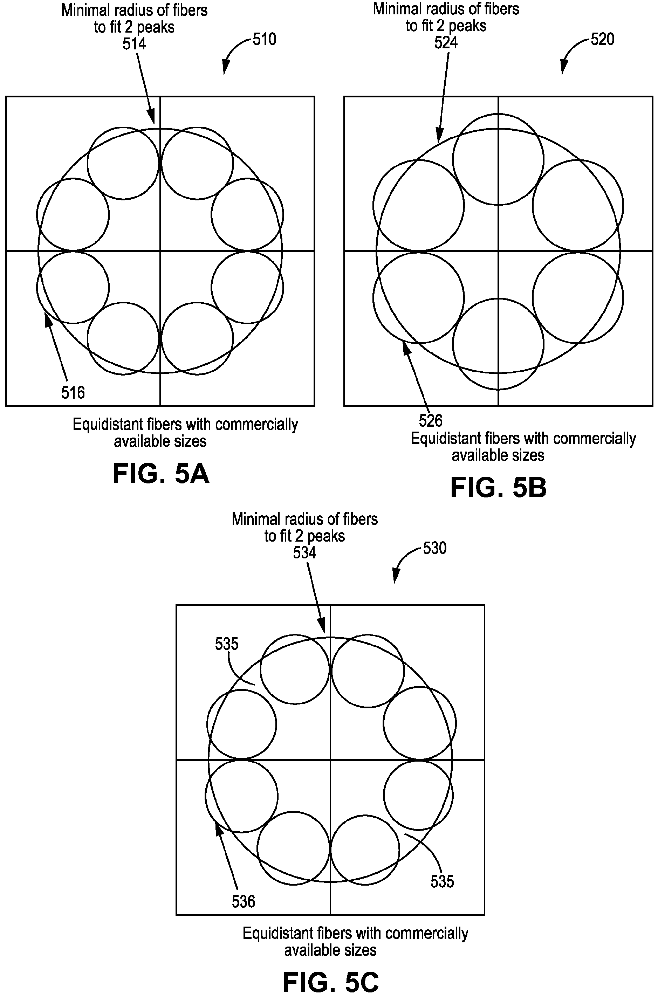

For example, Figure 5A is a schematic cross section view of a ferrule 510, in which a set of equidistant fibers (e.g., eight fibers) with commercially available sizes are selected to meet the minimal radius of fibers to fit two peaks, as indicated at 514, with no manufacturing tolerances (e.g., N = 4, 8, 12). The selected equidistant fibers with commercially available sizes are indicated at 516.

Figure 5B is a schematic cross section view of a ferrule 520, in which a set of equidistant fibers (e.g., six fibers) with commercially available sizes are selected to meet the minimal radius of fibers to fit two peaks, as indicated at 524, with no manufacturing tolerances (e.g., N = 6, 10, 14). The equidistant fibers with commercially available sizes are indicated at 526.

Figure 5C is a schematic cross section view of a ferrule 530, in which a set of equidistant fibers (e.g., eight fibers) with commercially available sizes are selected to meet the minimal radius of fibers to fit two peaks, as indicated at 534, but with a manufacturing tolerance indicated at 535 (e.g., N = 4, 8, 12). The equidistant fibers with commercially available sizes are indicated at 536.

In step 7) of the design example, half of the selected equidistant fibers (from step 6)) are selected and arranged such that there is a gap (including manufacturing tolerance if applicable) between every channel, to prevent bias from ghost effects. For example, when there are 4, 8, or 12 fibers, two fibers are selected that are separated by a manufacturing tolerance or are in direct contact with each other. When there are 6, 10, or 14 fibers, there is a gap between these fibers.

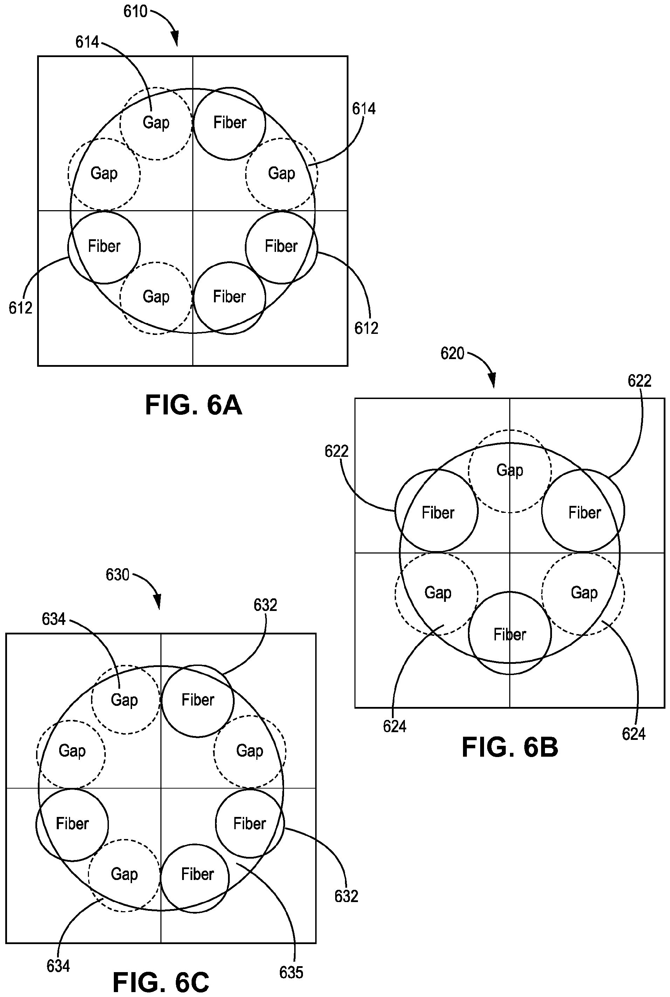

Figure 6A is a schematic cross section view of a ferrule 610, in which four fibers 612 are selected and arranged, with no manufacturing tolerances, such that there are gaps 614 between channels and two of the fibers are in direct contact with each other (e.g., N = 4, 8, 12). Figure 6B is a schematic cross section view of a ferrule 620, in which three fibers 622 are selected and arranged, with no manufacturing tolerances, such that there is a gap 624 between each pair of fibers (e.g., N = 6, 10, 14). Figure 6C is a schematic cross section view of a ferrule 630, in which four fibers 632 are selected and arranged, such that there are gaps 634 between channels and two of the fibers are separated by a manufacturing tolerance indicated at 635 (e.g., N = 4, 8, 12).

In step 8) of the design example, the arranged fibers are rotated along the identified optical center of the ferrule, such that one fiber is next to or touches the sensitivity axis, or one fiber has a center that is along the sensitivity axis. For example, if there are 4, 8, or 12 fibers, one of these fibers is positioned to be touching the sensitivity axis. If there are 6, 10, or 14 fibers, a center of one of these fibers is along the sensitivity axis.

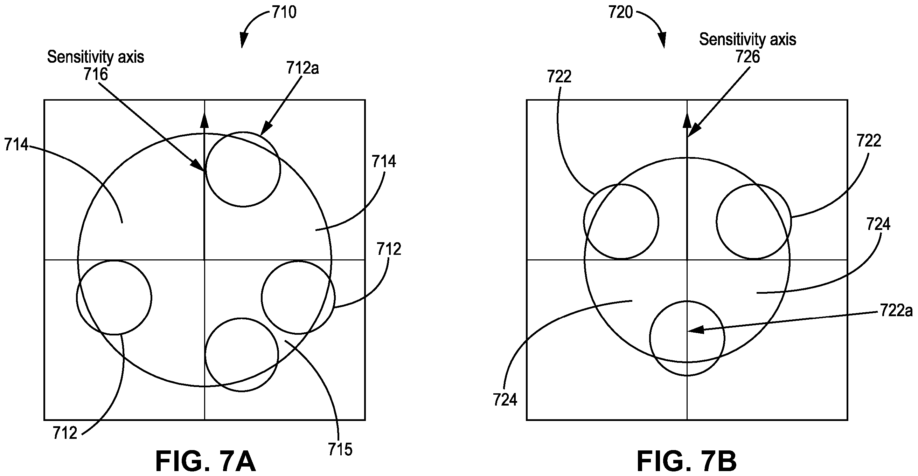

Figure 7A is a schematic cross section view of a ferrule 710, in which four fibers 712 are selected and arranged, such that there are gaps 714 between channels and two of the fibers are separated by a manufacturing tolerance 715 (e.g., N = 4, 8, 12). A fiber 712a of the four fibers is positioned to be touching a sensitivity axis 716. Figure 7B is a schematic cross section view of a ferrule 720, in which three fibers 722 are selected and arranged, such that there is a gap 724 between each pair of fibers (e.g., N = 6, 10, 14). A fiber 722a of the three fibers is positioned such that a center of fiber 722a is along (or intersects) a sensitivity axis 726.

In step 9) of the design example, if there is enough inner space in the central channel after placement of the selected fibers, the foregoing steps 4) to 8) can be repeated, with the exception that the boundary is defined by the already placed fibers, and the sensitivity axis is rotated by about 45 degrees (from the position in step 8)), to achieve a more uniform covered area. The already placed fibers define an inner boundary within which additional smaller fibers can be placed around the optical axis. The smaller fibers each have a cross-sectional diameter that is smaller than that of the already placed fibers.

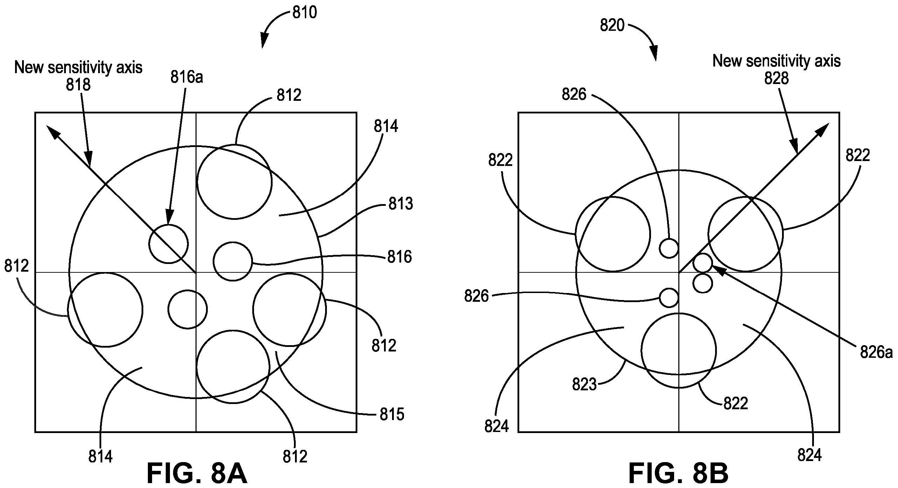

For example, Figure 8A is a schematic cross section view of a ferrule 810, in which four larger fibers 812 have been placed in a central channel 813 such that there are gaps 814 between fiber channels and two of the fibers 812 are separated by a manufacturing tolerance 815 (such as shown in Fig. 7A). The fibers 812 are used to define an inner boundary for placement of three additional smaller fibers 816. A new sensitivity axis 818 is rotated by about 45 degrees (from the sensitivity axis in Fig. 7A), such that a center of a fiber 816a of the smaller fibers is along (or intersects) new sensitivity axis 818.

Figure 8B is a schematic cross section view of a ferrule 820, in which three larger fibers 822 have been placed in a central channel 823 such that there is a gap 824 between each pair of fibers (such as shown in Fig. 7B). These fibers 822 are used to define an inner boundary for placement of four additional smaller fibers 826. A new sensitivity axis 828 is rotated by about 45 degrees (from the sensitivity axis in Fig. 7B), such that a fiber 826a of the smaller fibers is positioned to be touching new sensitivity axis 828.

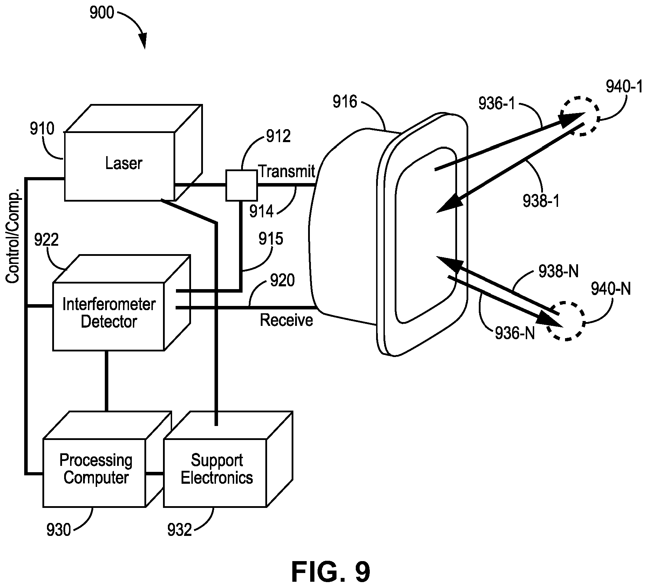

Figure 9 illustrates an optical sensor system 900 for a vehicle such as aircraft, according to one embodiment, which can utilize the present ghost effect mitigation approach. The optical sensor system 900 generally includes a laser device 910, an optical splitter 912 coupled to an output of laser device 910, and a set of transmit optical fibers 914 coupled to an output of optical splitter 912. An optical head 916 includes transmit optical components and receive optical components. The transmit optical fibers 914 are coupled to the transmit optical components of optical head 916. A set of receive optical fibers 920 are coupled to the receive optical components of optical head 916. An optical interferometer detector 922 is coupled to the receive optical fibers 920. A processing computer 930 and support electronics 932 are operatively coupled to interferometer detector 922 and laser device 910. In one embodiment, optical sensor system 900 can be implemented in a light detection and ranging (LiDAR) system.

The interferometer detector 922 includes a ferrule and optical processing components such as lenses, an optical detector, and an etalon such as a Fabry-Perot etalon. The etalon includes first and second optically clear components which are separated. Due to the separation between the first and second optically clear components, the etalon output generates a desired interference pattern, which is emitted as an output optical signal. The interference pattern is a result of self-interference of an input ray and its reflections happening between highly reflected inner surfaces of an etalon gap.

The ferrule includes a reference channel, a central channel, and measurement (sky) channels formed by the receive optical fibers configured into a bundle. The present approach provides a way to design and bundle fibers in the central channel to mitigate against unwanted ghost reflections inside interferometer detector 922, such that these ghost reflections do not to interfere with the measurement channels.

In one embodiment, a first portion of the optical fibers in the central channel define an inner boundary, and the first portion of the optical fibers each have a first cross-sectional diameter. A second portion of the optical fibers are located within the inner boundary and around an optical axis. The second portion of the optical fibers each having a second cross-sectional diameter that is smaller than the first cross-sectional diameter.

During operation of optical sensor system 900, laser device 910 transmits an optical signal to optical splitter 912, which in turn sends portions of the optical signal to transmit optical fibers 914 to produce measurement channels. The optical splitter 912 also provides one or more reference signals to interferometer detector 922 through one or more reference channel fibers 915. Based on the optical signals from transmit optical fibers 914, the transmit optical components in optical head 916 emit transmit optical signals 936-1, 936-N to respective interrogation regions 940-1, 940-N. A portion of each transmit optical signal 936-1, 936-N is reflected back as respective receive optical signals 938-1, 938-N to corresponding receive optical components in optical head 916. The receive optical signals 938-1, 938-N are then directed by the receive optical fibers 920 to interferometer detector 922.

The one or more reference signals and each receive optical signal are separately projected from different locations on the ferrule to the input surface of the etalon. As a result, the etalon projects interference patterns (which are separate etalon output optical signals) at the same relative locations of the one or more reference signals and each receive optical signal. The interference patterns are then imaged on an optical detector such as a camera to produce fringe images, which are sent to processing computer 930. The processing computer 930 processes the fringe images, including finding the optical axis and interference pattern scaling, with one or more algorithms to derive various air data parameters. The processing computer 930 also sends control and compensation signals to laser device 910.

The processing units and/or other computational devices used in the system and method described herein may be implemented using software, firmware, hardware, or appropriate combinations thereof. The processing units and/or other computational devices may be supplemented by, or incorporated in, specially-designed application-specific integrated circuits (ASICs) or field programmable gate arrays (FPGAs). The processing units and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, non-volatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a method comprising: (a) identifying an optical axis with central symmetry in a central channel of a ferrule for an optical system having a given aligned optical setup; (b) aligning outer surfaces of an etalon of the optical system such that a normal of the surfaces are parallel; (c) selecting a sensitivity axis in the central channel of the ferrule; (d) selecting a boundary for the central channel that encompasses at least two fringes during operation conditions of the optical system for the given aligned optical setup; (e) defining a minimal radius of an optical fiber to fit N channels, which are equidistantly populated around the boundary such that N is at least four; (f) selecting a set of optical fibers in which each optical fiber substantially has the minimal radius of an optical fiber to fit N channels; (g) placing half of the set of optical fibers in the central channel such that there are gaps between the placed optical fibers; and (h) rotating the placed optical fibers around the identified optical axis such that one optical fiber is next to the sensitivity axis, or one optical fiber has a center that intersects the sensitivity axis; wherein the gaps between the placed optical fibers prevent biased measurements from ghost reflections in the ferrule of the optical system.

Example 2 includes the method of Example 1, wherein the N channels include an even number of optical fiber pairs.

Example 3 includes the method of Example 1, wherein the N channels include an odd number of optical fiber pairs.

Example 4 includes the method of Example 1, wherein placing half of the set of optical fibers in the central channel includes placing three optical fibers equidistantly in the central channel such that there is a gap between each pair of optical fibers.

Example 5 includes the method of Example 4, wherein one of the optical fibers is positioned such that a center thereof is along the sensitivity axis.

Example 6 includes the method of Example 1, wherein placing half of the set of optical fibers in the central channel includes placing an even number of optical fiber pairs in the central channel, with no manufacturing tolerance, such that two of the optical fibers are in direct contact with each other.

Example 7 includes the method of Example 1, wherein placing half of the set of optical fibers in the central channel includes placing an even number of optical fiber pairs in the central channel such that two of the optical fibers are separated by a manufacturing tolerance.

Example 8 includes the method of Example 7, wherein another one of the optical fibers is positioned to touch the sensitivity axis.

Example 9 includes the method of any of Examples 1-8, further comprising: repeating steps (d) to (h), except that the boundary is defined by already placed optical fibers, and a new sensitivity axis is rotated by about 45 degrees from the selected sensitivity axis in the central channel.

Example 10 includes the method of Example 9, wherein the optical fibers placed in the central channel define an inner boundary and each have a first cross-sectional diameter, the method further comprising: placing additional optical fibers within the inner boundary and around the optical axis, the additional optical fibers each having a second cross-sectional diameter that is smaller than the first cross-sectional diameter.

Example 11 includes the method of Example 10, wherein: a center of one of the additional optical fibers is along the new sensitivity axis; or one of the additional optical fibers is positioned to touch the new sensitivity axis.

Example 12 includes the method of Example 9, wherein four optical fibers already placed in the central channel define an inner boundary, and three additional smaller optical fibers are placed within the inner boundary, wherein a center of one of the smaller optical fibers is along the new sensitivity axis.

Example 13 includes the method of Example 9, wherein three optical fibers already placed in the central channel define an inner boundary, and four additional smaller optical fibers are placed within the inner boundary, wherein one of the smaller optical fibers is positioned to touch the new sensitivity axis.

Example 14 includes the method of any of Examples 1-13, wherein the optical system is implemented in a light detection and ranging (LiDAR) system.

Example 15 includes an optical system comprising: an optical interferometer including a ferrule having a central channel, a reference channel, and a plurality of measurement channels, wherein the central channel has an optical axis and a sensitivity axis substantially orthogonal to the optical axis; and a plurality of optical fibers coupled to the ferrule, wherein a first portion of the optical fibers are located in the central channel around the optical axis such that there are one or more gaps between the optical fibers in the central channel, wherein at least one of the optical fibers in the central channel is next to the sensitivity axis, or at least one of the optical fibers in the central channel has a center that intersects the sensitivity axis; wherein the one or more gaps between the optical fibers in the central channel mitigate against ghost reflections inside the optical interferometer, such that the ghost reflections do not interfere with the measurement channels.

Example 16 includes the optical system of Example 15, wherein: the first portion of the optical fibers in the central channel define an inner boundary, the first portion of the optical fibers each having a first cross-sectional diameter; and a second portion of the optical fibers are located within the inner boundary and around the optical axis, the second portion of the optical fibers each having a second cross-sectional diameter that is smaller than the first cross-sectional diameter.

Example 17 includes the optical system of any of Examples 15-16, wherein the optical system is implemented in a light detection and ranging (LiDAR) system.

Example 18 includes an optical sensor system comprising: a laser device; a set of transmit optical fibers optically coupled to an output of the laser device; an optical head including transmit optical components and receive optical components, wherein the transmit optical fibers are coupled to the transmit optical components; a set of receive optical fibers coupled to the receive optical components of the optical head; and an optical interferometer coupled to the receive optical fibers, the optical interferometer including a ferrule having a central channel, a reference channel, and a plurality of measurement channels, wherein the central channel has an optical axis and a sensitivity axis substantially orthogonal to the optical axis; wherein a first portion of the receive optical fibers are located in the central channel around the optical axis such that there are one or more gaps between the receive optical fibers in the central channel, wherein at least one of the receive optical fibers in the central channel is next to the sensitivity axis, or at least one of the receive optical fibers in the central channel has a center that intersects the sensitivity axis; wherein the one or more gaps between the receive optical fibers in the central channel mitigate against ghost reflections inside the optical interferometer, such that the ghost reflections do not interfere with the measurement channels.

Example 19 includes the optical sensor system of Example 18, wherein: the first portion of the receive optical fibers in the central channel define an inner boundary, the first portion of the receive optical fibers each having a first cross-sectional diameter; and a second portion of the receive optical fibers are located within the inner boundary and around the optical axis, the second portion of the receive optical fibers each having a second cross-sectional diameter that is smaller than the first cross-sectional diameter.

Example 20 includes the optical sensor system of any of Examples 18-19, wherein the optical sensor system is implemented in a light detection and ranging (LiDAR) system.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A method comprising:
(a) identifying an optical axis with central symmetry in a central channel of a ferrule for an optical system having a given aligned optical setup;
(b) aligning outer surfaces of an etalon of the optical system such that a normal of the surfaces are parallel;
(c) selecting a sensitivity axis in the central channel of the ferrule;
(d) selecting a boundary for the central channel that encompasses at least two fringes during operation conditions of the optical system for the given aligned optical setup;
(e) defining a minimal radius of an optical fiber to fit N channels, which are equidistantly populated around the boundary such that N is at least four;
(f) selecting a set of optical fibers in which each optical fiber substantially has the minimal radius of an optical fiber to fit N channels;
(g) placing half of the set of optical fibers in the central channel such that there are gaps between the placed optical fibers; and
(h) rotating the placed optical fibers around the identified optical axis such that one optical fiber is next to the sensitivity axis, or one optical fiber has a center that intersects the sensitivity axis;
wherein the gaps between the placed optical fibers prevent biased measurements from ghost reflections in the ferrule of the optical system.

2. The method of claim 1, wherein the N channels include an even number of optical fiber pairs.

3. The method of claim 1, wherein the N channels include an odd number of optical fiber pairs.

4. The method of claim 1, wherein placing half of the set of optical fibers in the central channel includes placing three optical fibers equidistantly in the central channel such that there is a gap between each pair of optical fibers;
wherein one of the optical fibers is positioned such that a center thereof is along the sensitivity axis.

5. The method of claim 1, wherein placing half of the set of optical fibers in the central channel includes placing an even number of optical fiber pairs in the central channel, with no manufacturing tolerance, such that two of the optical fibers are in direct contact with each other.

6. The method of claim 1, wherein placing half of the set of optical fibers in the central channel includes placing an even number of optical fiber pairs in the central channel such that two of the optical fibers are separated by a manufacturing tolerance;
wherein another one of the optical fibers is positioned to touch the sensitivity axis.

7. The method of claim 1, further comprising:
repeating steps (d) to (h), except that the boundary is defined by already placed optical fibers, and a new sensitivity axis is rotated by about 45 degrees from the selected sensitivity axis in the central channel;
wherein the optical fibers placed in the central channel define an inner boundary and each have a first cross-sectional diameter, the method further comprising:
placing additional optical fibers within the inner boundary and around the optical axis, the additional optical fibers each having a second cross-sectional diameter that is smaller than the first cross-sectional diameter.

8. The method of claim 7, wherein:
a center of one of the additional optical fibers is along the new sensitivity axis; or
one of the additional optical fibers is positioned to touch the new sensitivity axis.

9. An optical system comprising:
an optical interferometer including a ferrule having a central channel, a reference channel, and a plurality of measurement channels, wherein the central channel has an optical axis and a sensitivity axis substantially orthogonal to the optical axis; and
a plurality of optical fibers coupled to the ferrule, wherein a first portion of the optical fibers are located in the central channel around the optical axis such that there are one or more gaps between the optical fibers in the central channel, wherein at least one of the optical fibers in the central channel is next to the sensitivity axis, or at least one of the optical fibers in the central channel has a center that intersects the sensitivity axis;
wherein the one or more gaps between the optical fibers in the central channel mitigate against ghost reflections inside the optical interferometer, such that the ghost reflections do not interfere with the measurement channels.

10. An optical sensor system comprising:
a laser device;
a set of transmit optical fibers optically coupled to an output of the laser device;
an optical head including transmit optical components and receive optical components, wherein the transmit optical fibers are coupled to the transmit optical components;
a set of receive optical fibers coupled to the receive optical components of the optical head; and
an optical interferometer coupled to the receive optical fibers, the optical interferometer including a ferrule having a central channel, a reference channel, and a plurality of measurement channels, wherein the central channel has an optical axis and a sensitivity axis substantially orthogonal to the optical axis;
wherein a first portion of the receive optical fibers are located in the central channel around the optical axis such that there are one or more gaps between the receive optical fibers in the central channel, wherein at least one of the receive optical fibers in the central channel is next to the sensitivity axis, or at least one of the receive optical fibers in the central channel has a center that intersects the sensitivity axis;
wherein the one or more gaps between the receive optical fibers in the central channel mitigate against ghost reflections inside the optical interferometer, such that the ghost reflections do not interfere with the measurement channels.
